# FASCICULE DE BREVET EUROPEEN

(11) **EP 3 882 444 B1**
(45) Date de publication et mention de la délivrance du brevet: **07.05.2025**
(21) Numéro de dépôt: 21162714.6
(22) Date de dépôt: 16.03.2021
(51) Int. Cl.: F16H 7/02, F02B 67/04, F02B 67/06

(54) **CARTER DISTRIBUTION COMPRENANT UN SYSTÈME D' ENTRAINEMENT D' ACCESSOIRES**
VERTEILERGEHÄUSE, DAS EIN ANTRIEBSSYSTEM DER ZUSATZTEILE UMFASST
TIMING COVER COMPRISING A SYSTEM FOR DRIVING ACCESSORIES

(30) Priorité: 20.03.2020 FR 2002769
(43) Date de publication de la demande: 22.09.2021
(73) Titulaire: NEW H POWERTRAIN HOLDING, S.L.U., 47008 Valladolid (ES)
(72) Inventeur: Millon, Jean-Pierre, 78870 Bailly (FR); POMMERY, William, 95560 MONTSOULT (FR); TESSIER, Ludovic, 93370 Montfermeil (FR)
(74) Mandataire: Renault Group

(56) Documents cités:
- WO-A1-02/075133
- DE-A1- 102016 200 407
- GB-A- 507 106
- US-A1- 2012 073 527
- STONE R ET AL: "Modul fuer Synchron- und Nebenaggregatsantriebe", MTZ - MOTORTECHNISCHE ZEITSCHRIFT, SPRINGER, vol. 66, no. 5, 1 May 2005 (2005-05-01), pages 376 - 383, XP001518663, ISSN: 0024-8525

## Description

### Domaine technique de l'invention

La présente invention concerne un moteur à combustion interne de véhicule automobile.

La présente invention concerne un carter de distribution de moteur à combustion interne qui entraine un moteur électrique, notamment une génératrice de courant.

La présente invention concerne plus particulièrement un carter de distribution disposé entre un moteur thermique et un moteur électrique.

### Etat de la technique

Un véhicule automobile peut être équipé d'une motorisation thermique aidé par une machine électrique pour augmenter son efficacité ou étendre le rayon d'action du véhicule.

La machine électrique peut être une génératrice de courant apte à accroitre la charge d'une batterie pour un moteur électrique. Le moteur électrique est dans ce cadre apte à faire tourner ladite génératrice pour produire l'énergie électrique.

La machine électrique peut être également formée par un alterno-démarreur apte à aider un moteur thermique lors des phases de démarrage du véhicule. On parle alors de moteur hybride P0.

Le moteur électrique est connecté en permanence avec le moteur thermique.

De manière connue, l'architecture d'un moteur hybride P0 nécessite que le moteur électrique soit tourné vers la face de distribution du moteur thermique. De ladite face de distribution débouchent une extrémité d'entrainement d'un vilebrequin portant une roue d'entrainement apte à entrainer avec une courroie ou une chaine des accessoires dont une pompe à eau et un arbre à cames.

Il est connu de disposer la machine électrique accolée contre la paroi du moteur thermique. Toutefois un tel agencement augmente considérablement l'encombrement radial de l'ensemble composé des deux moteurs selon un axe transversal Y à l'axe longitudinal X du moteur thermique.

Le moteur électrique est généralement connecté avec le moteur thermique par une courroie qui entoure la roue d'entrainement du vilebrequin et la roue d'actionnement du moteur thermique. La transmission par courroie limite l'efficacité de ce type de moteur hybride P0.

La face de distribution du moteur thermique est recouverte par un carter de distribution qui permet une étanchéité aux vapeurs et huiles contenues entre la face de distribution du moteur thermique et ledit carter et nécessaires pour assurer les lubrifications des transmissions entre les axes tournants.

La publication DE102004005349-A1 propose un moteur hybride comprenant un moteur à combustion interne et une machine électrique dans une configuration P0 avec un train épicycloïdal reliant le moteur thermique au moteur électrique.

Un inconvénient est l'encombrement important de ladite motorisation, le moteur électrique est positionné contre le moteur thermique, notamment contre une face transversale du moteur thermique.

Un autre inconvénient concerne l'efficacité de la transmission entre le moteur thermique et le moteur électrique liée au rendement du train épicycloïdal.

Un autre inconvénient concerne la complexité de la liaison entre les deux moteurs et donc de l'assemblage/désassemblage des deux moteurs ensemble.

La publication EP1829725-A2 propose un agencement de moteur électrique en face de la face de transmission opposée à la face de distribution d'un moteur thermique.

La publication FR3022495-A1 propose un système de transmission hybride à une machine hybride agencée du côté de la face de transmission du moteur thermique.

Ce type d'agencement est connu et permet un couplage du moteur thermique avec le moteur électrique.

Il ne permet pas de réaliser des agencements du côté de la face de distribution du moteur afin d'optimiser l'encombrement du groupe motopropulseur comprenant un moteur thermique et une machine électrique.

La publication GB507106A propose un arrangement ayant un moteur thermique et un système d'entraînement auxiliaire adapté pour entraîner un arbre à cames et une machine génératrice portée par un carter de distribution du moteur. Il comprend une roue dentée à la fois intérieurement et extérieurement, qui coopère par ses dents intérieures avec un pignon monté en bout du vilebrequin du moteur, et par ses dents extérieures avec une chaîne d'entraînement, de manière à obtenir un rapport de réduction de 2 : 1 entre le vilebrequin et l'arbre à cames.

Les agencements de machine électrique côté face de distribution doivent également permettre un montage et démontage des différents éléments, notamment de la machine électrique contre/du moteur thermique. En effet l'accouplement direct entre les roues dentées du vilebrequin et de la machine électrique pour pouvoir transmettre des couples élevés peut poser des problèmes d'ajustement et/ou de réglage entre les dents.

Le but de l'invention est de remédier à ces problèmes et un des objets de l'invention est une liaison entre les deux moteurs thermique et électrique tournée vers la face de distribution du moteur thermique simple et fiable avec un accouplement/désaccouplement aisé de la machine électrique d'avec le moteur thermique.

### Présentation de l'invention

La présente invention concerne plus particulièrement un agencement de groupe motopropulseur de véhicule automobile comprenant un moteur thermique comportant un vilebrequin connecté avec un système d'entrainement d'accessoires de moteur thermique et de machine électrique, ledit système étant porté par un carter de distribution recouvrant une face de distribution du moteur thermique. Selon l'invention, le vilebrequin du moteur thermique comporte un manchon primaire agencé à son extrémité, ledit manchon porte une roue d'entrainement de distribution et des cannelures s'étendant longitudinalement d'accouplement aptes à coopérer avec le système d'entrainement et d'actionnement d'accessoires.

De manière avantageuse, le groupe motopropulseur comprend un moteur thermique et une machine thermique connectés ensemble par un système d'actionnement et le moteur thermique comprend également des accessoires connectés au moteur thermique par le même système d'entrainement qui est porté par un carter de distribution recouvrant la face de distribution du moteur thermique. La face de distribution est opposée à la face de transmission du moteur thermique qui comporte qui comporte des accouplements avec par exemple un volant moteur ou une boite de vitesses. Cet agencement permet de réduire l'encombrement radial du moteur thermique.

Selon d'autres caractéristiques de l'invention :
- Les accessoires sont dans une liste comprenant une pompe à eau.

De manière avantageuse, la pompe à eau n'est pas agencée radialement par rapport au moteur thermique mais porté par le carter de distribution pour réduire son encombrement radial.
- les accessoires sont portés par le carter de distribution.

De manière avantageuse, les accessoires sont portés par le carter de distribution pour réduire l'encombrement radial du moteur thermique.

De manière avantageuse, le manchon primaire porte une roue d'entrainement de distribution pour entrainer un arbre à cames et également des cannelures longitudinales aptes à coopérer avec le système d'entrainement porté par le carter de distribution pour permettre d'agencer les accessoires ainsi que la machine électrique dans le prolongement dudit moteur selon son axe longitudinal et réduire l'encombrement radial du moteur thermique.
- le système d'entrainement comprend une roue d'entrainement primaire portée par un manchon tubulaire de guidage.

De manière avantageuse, le système comprend une roue d'entrainement primaire portée par un manchon tubulaire de guidage pour d'une part transmettre le couple aux accessoires et d'autre part de maintenir l'axe de la roue d'entrainement primaire coaxiale avec l'axe du manchon primaire.
- le manchon de guidage est logé dans une cavité creusée dans le carter de distribution.

De manière avantageuse, le manchon primaire est logé dans une cavité creusée dans le carter de distribution pour minimiser l'encombrement et pour assurer une étanchéité à l'huile.

En effet, un orifice traversant peut laisser échapper de l'huile ou des vapeurs d'huile de lubrification provenant du moteur thermique.
- Le manchon de guidage est entouré et maintenu mobile en rotation par des roulements ou des paliers logés dans la cavité.

De manière avantageuse, le manchon de guidage est entouré et maintenu dans la cavité par des roulements qui permettent une liaison pivot offrant un seul degré de liberté en rotation. Les roulements peuvent être remplacés par des paliers.
- la roue d'entrainement engrène directement une roue d'actionnement d'un système d'actionnement des accessoires.

De manière avantageuse, la roue d'entrainement engrène directement c'est-à-dire sans élément intermédiaire une roue d'actionnement d'un système d'actionnement des accessoires afin de définir un rapport de réduction et de transmettre un couple important.
- le système d'actionnement comprend un manchon d'actionnement porté par le carter de distribution, qui porte la roue d'actionnement des accessoires, notamment de la machine électrique.

De manière avantageuse, le système d'actionnement comprend un manchon d'actionnement qui est porté par le carter de distribution et qui porte la roue d'actionnement de la machine électrique, qui permet une liaison de la roue d'actionnement avec le carter de distribution.
- le manchon d'actionnement traverse le carter de distribution et est maintenu mobile en rotation dans un orifice traversant par des roulements ou des paliers.

De manière avantageuse, le manchon d'actionnement traverse la paroi du carter de distribution pour permettre une mise en place aisée de la machine électrique. Il est maintenu mobile en rotation dans un orifice traversant ladite paroi par des roulements ou des paliers autorisant un seul degré de liberté en rotation.
- le manchon d'actionnement comporte un moyen de liaison en rotation réversible avec un bras d'actionnement de machine électrique.

De manière avantageuse, le manchon d'actionnement comporte un moyen de liaison en rotation réversible avec un bras d'actionnement de la machine électrique pour faciliter l'accouplement/le désaccouplement de ladite machine avec le système d'actionnement, notamment la fixation/l'enlèvement de ladite machine du carter de distribution du moteur thermique. On peut retirer facilement le bras d'actionnement de la machine électrique et désaccoupler la machine électrique du carter de distribution du moteur thermique en faisant coulisser ledit bras selon son axe.
- le moyen de liaison est dans une liste comprenant une cannelure longitudinale s'étendant sur sa paroi intérieure depuis une extrémité tournée vers l'extérieur du moteur thermique, apte à coopérer avec une denture d'un bras d'actionnement de la machine électrique.

De manière avantageuse, l'extrémité tournée vers l'extérieur du moteur thermique, du manchon d'actionnement comprend sur sa paroi intérieure une cannelure longitudinale s'étendant depuis ladite extrémité, apte à coopérer avec une denture d'un bras d'actionnement de la machine électrique, pour faciliter la connexion de la machine électrique avec le système d'entrainement porté par le carter de distribution. En effet, la machine électrique peut disposer d'un bras d'actionnement comportant au moins une denture qui sera emmanché dans ledit manchon pour assurer une liaison rotative fiable et simple.
- le manchon d'actionnement porte un pignon de transmission.

De manière avantageuse, le manchon d'actionnement porte un pignon de transmission pour entrainer un pignon d'entrainement d'un accessoire, par exemple une pompe à eau. Ledit pignon de transmission est parallèle à la roue d'actionnement.
- la roue d'actionnement ainsi que la roue primaire d'entrainement sont recouverts par le carter de distribution.

De manière avantageuse, les roues sont recouvertes par le carter de distribution et sont donc logées dans une chambre délimitée par la face de distribution du moteur thermique et le carter de distribution pour permettre une lubrification simple des contacts mobiles.

### Brève description des figures

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :
[Fig. 1] est une vue schématique de carter de distribution de groupe motopropulseur comportant une machine électrique.
[Fig. 2] est une vue schématique d'un manchon primaire entourant une extrémité de vilebrequin.
[Fig. 3] est une schématique d'un système d'entrainement d'accessoires.
[Fig. 4] est une vue schématique de coupe longitudinale du système d'entrainement d'accessoires.
[Fig. 5] est une vue schématique des roues d'entrainement et d'actionnement du système d'entrainement d'accessoires.

Dans la description qui va suivre, des chiffres de référence identiques désignent des pièces identiques ou ayant des fonctions similaires.

Afin de réduire ou de limiter les générations de polluants, les véhicules automobiles actuels sont pourvus de motorisation hybride comprenant un moteur thermique ou à combustion interne dénommé ICE couplé avec un moteur électrique ou une machine électrique. La puissance électrique permet d'utiliser le moteur thermique dans des zones de meilleur rendement en augmentant la charge et en stockant le supplément d'énergie dans la batterie. La traction en électrique seul est marginale, surtout parce que la machine électrique est rarement déconnectable du moteur thermique.

Cette hybridation inclut généralement soit un alterno-démarreur de 48 V en P0. Sa puissance varie de 12 kW sous 48 V à environ 40 kW sous quelques centaines de volts, mais n'excède pas la moitié de celle du propulseur thermique.

On peut aussi disposer de prolongateur d'autonomie avec une motorisation hybride comportant un moteur thermique et une machine électrique qui est une génératrice de courant électrique. Le moteur thermique est connecté à la machine électrique et apte à faire tourner le bras d'actionnement du moteur électrique qui pourra alors produire de l'électricité. Cette électricité sera contenue dans une batterie pour être utilisé ensuite par un moteur électrique connecté aux roues du véhicule. Ce type de prolongateur d'économie est connu sous le nom de « Range extender ».

L'invention peut concerner une motorisation hybride P0 ou un prolongateur d'autonomie.

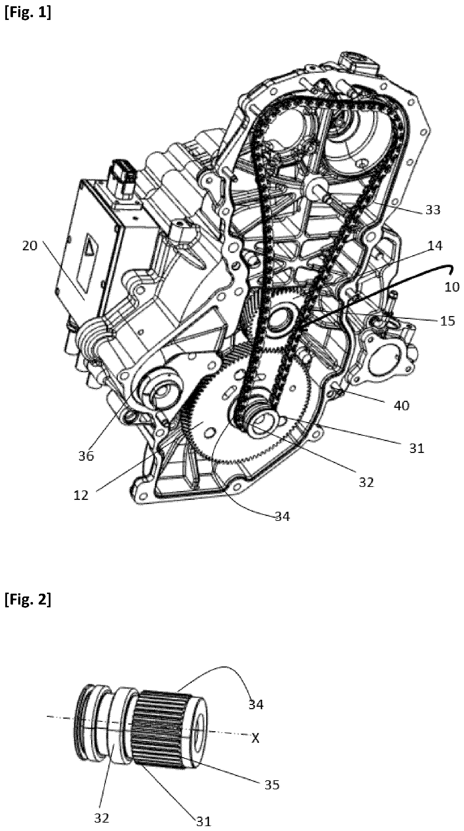

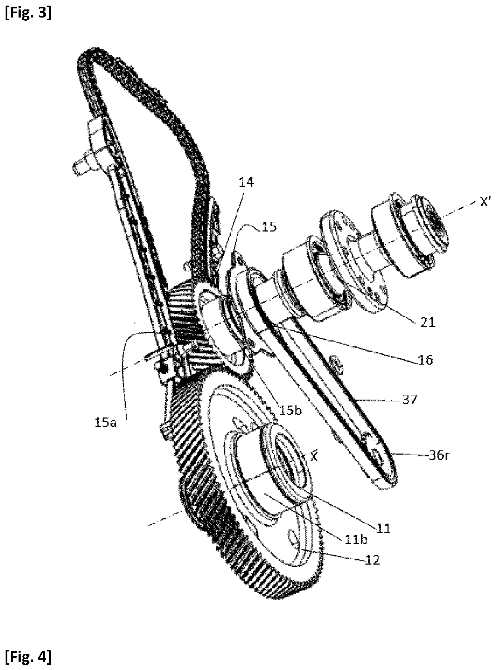

L'invention concerne un groupe motopropulseur comportant un moteur thermique ou à combustion interne (non représenté) et une machine électrique 20, ledit moteur thermique comprenant un vilebrequin mobile en rotation autour d'un axe longitudinal X dudit moteur comme représenté en figure 1 et 3.

Selon la figure 2, l'extrémité du vilebrequin débouche d'une face de distribution 30 dudit moteur thermique. Ladite extrémité est enfoncée dans un manchon primaire 31 tenant une roue dentée 32 de distribution.

Ladite roue dentée de distribution est entourée par une chaine 33 ou une courroie de distribution pour transmettre les rotations à des arbres à cames (non représentés).

Le manchon primaire 31 comporte aussi une partie d'accouplement 34 comportant une ou plusieurs cannelures 35 s'étendant longitudinalement selon l'axe X vers l'extérieur du moteur thermique. Lesdites cannelures longitudinales 35 sont aptes à coopérer avec un système d'entrainement des accessoires 10 pour entrainer en rotation lesdits accessoires.

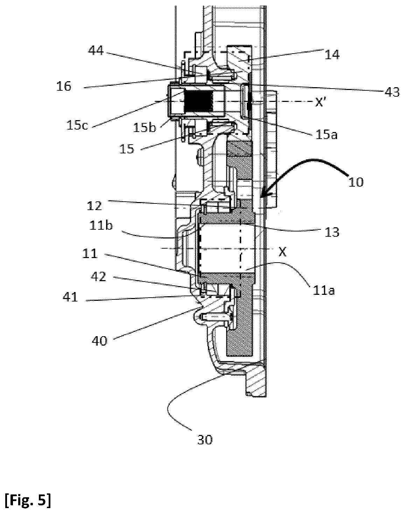

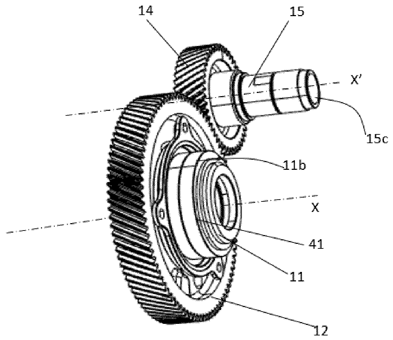

Selon les figures 4 et 5, ledit système d'entrainement 10 comprend un manchon tubulaire de guidage 11 qui porte une roue d'entrainement primaire 12 et qui comprend à une première extrémité 11a tournée vers le moteur thermique des cannelures longitudinales d'accrochage 13 de forme complémentaire aux cannelures longitudinales 35 du manchon primaire 31 au jeu de montage près. Le manchon de guidage 11 présente ainsi une section intérieure de diamètre efficace sensiblement égal au diamètre extérieur efficace du manchon primaire 31. Le manchon de guidage 11 est alors conformé pour venir coulisser au-dessus du manchon primaire 31 et recouvrir la partie d'accouplement 34 pour former une liaison en rotation.

De manière préférentielle, le manchon tubulaire de guidage 11 et la roue primaire d'entrainement 12 sont issues d'une seule pièce par moulage.

Le manchon tubulaire de guidage présente une seconde extrémité 11b opposée à la première extrémité 11a, qui est logée dans une cavité 41 creusée dans un carter de distribution 40. Le carter de distribution est destiné à recouvrir la face de distribution 30 du moteur thermique. Ainsi la deuxième extrémité 11b est maintenue par des roulements 42 ou des paliers logés dans la cavité 41. De manière préférentielle, on pourra prendre un roulement à billes avec un roulement à aiguilles pour former une liaison pivot autorisant un seul degré de liberté en rotation. Selon la figure 2, les roulements 42 sont des roulements à billes.

La roue primaire 12 du système d'entrainement 10 engrène directement une roue d'actionnement 14 tenue par un manchon tubulaire d'actionnement 15 de la machine électrique.

De manière préférentielle, la roue d'actionnement 14 et le manchon tubulaire d'actionnement 15 sont issus d'une seule pièce issue par moulage.

Selon la figure 4, ledit manchon 15 traverse la paroi du carter de distribution 40 par un orifice traversant 43 d'accouplement. Ledit manchon d'actionnement est maintenu mobile en rotation grâce des roulements 44 ou paliers logés dans l'orifice traversant 43. De manière préférentielle, on pourra prendre un roulement à billes associé avec un roulement à aiguilles pour former une liaison pivot n'autorisant qu'un degré de liberté en rotation.

Le manchon tubulaire d'actionnement 15 comprend également des cannelures d'accouplement 15c sur sa paroi intérieure 15i qui s'étendent depuis une seconde extrémité 15b libre opposée à une première extrémité 15a tournée vers le moteur thermique. La longueur des cannelures 15c d'accouplement peut être de quelques dizaines de millimètres.

Le manchon tubulaire d'actionnement 15 est donc conformé pour coopérer avec un bras d'actionnement 21 sensiblement cylindrique de la machine thermique 20. Ledit bras d'actionnement 21 peut comporter des dents longitudinales selon l'axe X' dudit bras 21 de forme complémentaire aux cannelures 15c du manchon d'actionnement 15. L'axe X' est parallèle à l'axe longitudinal X du vilebrequin du moteur thermique. Le diamètre extérieur efficace du bras d'actionnement est égal voire légèrement inférieur au diamètre intérieur du manchon tubulaire d'actionnement 15.

On pourra ainsi engager le bras d'actionnement 21 de la machine électrique 20 aisément dans le manchon tubulaire d'actionnement 15 et rendre solidaire en rotation le bras d'actionnement de la machine électrique avec le système d'entrainement 10.

De même on pourra désengager le bras d'actionnement 21 de la machine électrique 20 du manchon d'actionnement 15 en le faisant coulisser selon son axe vers l'extérieur du moteur et ainsi désaccoupler la machine électrique 20 du système d'entrainement 10.

Le manchon d'actionnement 15 forme donc une liaison réversible en rotation entre la machine électrique 20 par le bras d'actionnement 21, et le système d'entrainement 10.

Le manchon d'actionnement 15 porte à sa seconde extrémité un pignon de transmission 16. Ledit pignon 16 peut être entourée par une courroie de transmission 37 qui entoure également une roue d'entrainement 36r d'un accessoire qui peut être une pompe à eau 36.

Le pignon de transmission permet donc d'entrainer en rotation la roue d'entrainement de la pompe à eau 36.

Selon la figure XXXX, les roues d'entrainement, d'actionnement sont recouvertes par le carter de distribution. Plus précisément elles sont toutes disposées dans une chambre délimitée par la face de distribution du moteur thermique et le carter de distribution.

Les accessoires comme la pompe à eau et la machine électrique sont solidaires du carter de distribution.

Le montage du système d'entrainement 10 et des accessoires peut comprendre les étapes consécutives suivantes : Le système d'actionnement 10 est monté sur le carter de distribution, la pièce tubulaire est maintenue par les deux roulements.
1. Le système d'entrainement 10 est monté sur le carter de distribution. La roue dentée primaire engrène la roue d'actionnement. Les manchons tubulaires de guidage et d'actionnement sont fixés et maintenus dans la cavité du carter et dans l'orifice traversant grâce aux roulements.
2. La machine électrique est présentée face au carter de distribution,
3. Le bras d'actionnement de la machine électrique est engagé dans le manchon d'actionnement et la machine électrique est fixée au carter de distribution.
4. La pompe à eau est fixée au carter de distribution en ayant sa roue d'entrainement entourée par la courroie de transmission qui entoure également le pignon de transmission. La pompe à eau est alors fixée au carter de distribution.
5. Le carter de distribution est présenté face à la face de distribution du moteur thermique avec le manchon de guidage en vis-à-vis avec le manchon primaire. Le carter de distribution coulisse selon l'axe longitudinal X vers le moteur thermique et permet l'engagement du manchon primaire dans le manchon de guidage.
6. Le carter de distribution est alors fixé à l'aide de vis au moteur thermique recouvrant la face de distribution du moteur thermique ainsi que les roues d'entrainement et d'actionnement du système d'entrainement 10.

### L'objectif est atteint :

Le moteur thermique est accouplé à la machine électrique et à des accessoires par l'intermédiaire du carter de distribution de façon simple et fiable avec une transmission de couple importante. L'accouplement est simple et réversible tout en respectant les contraintes d'étanchéité à l'huile du moteur thermique.

Comme il va de soi, l'invention ne se limite pas aux seules formes d'exécution de cette prise, décrites ci-dessus à titre d'exemples, elle en embrasse au contraire toutes les variantes.

Les connexions entre les manchons primaire et de guidage peuvent être simplifiées sans porter atteinte à l'invention.

## Revendications

1. Agencement de groupe motopropulseur de véhicule automobile comprenant un moteur thermique comportant un vilebrequin connecté avec un système d'entrainement (10) d'accessoires (36) de moteur thermique et de machine électrique (20),
ledit système d'entrainement (10) étant porté par un carter de distribution (40) recouvrant une face de distribution (30) du moteur thermique, **caractérisé en ce que** le vilebrequin du moteur thermique comporte un manchon primaire (31) agencé à son extrémité, ledit manchon portant une roue d'entraînement de distribution (32) et des cannelures (35) d'accouplement, s'étendant longitudinalement, aptes à coopérer avec le système d'entraînement d'accessoires (10).

2. Agencement selon la revendication 1, **caractérisé en ce que** les accessoires (36) sont dans une liste comprenant une pompe à eau (36).

3. Agencement selon la revendication 1 ou 2, **caractérisé en ce que** les accessoires (36) sont portés par le carter de distribution (40).

4. Agencement selon l'une quelconque des revendications 1 à 3, **caractérisé en ce que** le système d'entrainement (10) comprend un manchon tubulaire de guidage (11) qui porte une roue d'entrainement primaire (12) et qui comprend des cannelures d'accrochage (13) aptes à coopérer avec les cannelures d'accouplement (35) du manchon primaire (31).

5. Agencement selon la revendication 4, **caractérisé en ce que** le manchon de guidage (11) est logé dans une cavité (41) creusée dans le carter de distribution (40).

6. Agencement selon la revendication 5, **caractérisé en ce que** le manchon de guidage (11) est entouré et maintenu mobile en rotation par des roulements (42) ou des paliers logés dans la cavité (41).

7. Agencement selon l'une quelconque des revendications 4 à 6, **caractérisé en ce que** la roue d'entrainement (12) engrène directement une roue d'actionnement (14) du système d'actionnement des accessoires (10).

8. Agencement selon l'une quelconque des revendications 1 à 7, **caractérisé en ce que** le système d'entraînement (10) comprend un manchon d'actionnement (15) porté par le carter de distribution (40) , qui porte la roue d'actionnement (14) des accessoires, notamment de la machine électrique (20).

9. Agencement selon la revendication 8, **caractérisé en ce que** le manchon d'actionnement (15) traverse le carter de distribution (40) et est maintenu mobile en rotation dans un orifice traversant (43) par des roulements (44) ou des paliers.

10. Agencement selon l'une quelconque des revendications 8 ou 9, **caractérisé en ce que** le manchon d'actionnement (15) comporte un moyen de liaison en rotation réversible avec un bras d'actionnement (21) de machine électrique (20).

11. Agencement selon la revendication 10, **caractérisé en ce que** le moyen de liaison est dans une liste comprenant une cannelure longitudinale (15c) s'étendant sur la paroi intérieure du manchon d'actionnement (15) depuis une extrémité tournée vers l'extérieur du moteur thermique, apte à coopérer avec des dents longitudinales du bras d'actionnement (21) de la machine électrique (20).

12. Agencement selon l'une quelconque des revendications 8 à 11, **caractérisé en ce que** le manchon d'actionnement (15) porte un pignon de transmission (16).

13. Agencement selon la revendication 12, **caractérisé en ce que** la roue d'actionnement (14) ainsi que la roue primaire (12) d'entrainement sont recouvertes par le carter de distribution (40).

## Patentansprüche

1. Antriebsstranganordnung für ein Kraftfahrzeug, umfassend einen Verbrennungsmotor, aufweisend eine Kurbelwelle, die mit einem Antriebssystem (10) für Nebenaggregate (36) des Verbrennungsmotors und einer Elektromaschine (20) verbunden ist,
wobei das Antriebssystem (10) von einem Verteilergehäuse (40) getragen wird, das eine Verteilerfläche (30) des Verbrennungsmotors abdeckt, **dadurch gekennzeichnet, dass** die Kurbelwelle des Verbrennungsmotors eine an ihrem Ende angeordnete Primärhülse (31) aufweist, wobei die Hülse ein Verteilerantriebsrad (32) und sich in Längsrichtung erstreckende Kupplungskeilwellen (35) trägt, die geeignet sind, mit dem Nebenaggregatantriebssystem (10) zusammenzuwirken.

2. Anordnung nach Anspruch 1, **dadurch gekennzeichnet, dass** die Nebenaggregate (36) in einer Liste enthalten sind, umfassend eine Wasserpumpe (36).

3. Anordnung nach Anspruch 1 oder 2, **dadurch gekennzeichnet, dass** die Nebenaggregate (36) von dem Verteilergehäuse (40) getragen werden.

4. Anordnung nach einem der Ansprüche 1 bis 3,
**dadurch gekennzeichnet, dass** das Antriebssystem (10) eine rohrförmige Führungshülse (11) umfasst, die ein Primärantriebsrad (12) trägt und Einrastkeilwellen (13) umfasst, die geeignet sind, mit den Kupplungskeilwellen (35) der Primärhülse (31) zusammenzuwirken.

5. Anordnung nach Anspruch 4, **dadurch gekennzeichnet, dass** die Führungshülse (11) in einem Hohlraum (41) untergebracht, der in das Verteilergehäuse (40) gebohrt ist.

6. Anordnung nach Anspruch 5, **dadurch gekennzeichnet, dass** die Führungshülse (11) von Rollen (42) oder in dem Hohlraum (41) untergebrachten Lagern umgeben und drehbeweglich gehalten wird.

7. Anordnung nach einem der Ansprüche 4 bis 6,
**dadurch gekennzeichnet, dass** das Antriebsrad (12) direkt in ein Betätigungsrad (14) des Nebenaggregatbetätigungssystems (10) eingreift.

8. Anordnung nach einem der Ansprüche 1 bis 7,
**dadurch gekennzeichnet, dass** das Antriebssystem (10) eine von dem Verteilergehäuse (40) getragene Betätigungshülse (15) umfasst, die das Betätigungsrad (14) der Nebenaggregate, insbesondere der Elektromaschine (20), trägt.

9. Anordnung nach Anspruch 8, **dadurch gekennzeichnet, dass** die Betätigungshülse (15) das Verteilergehäuse (40) durchdringt und von Rollen (44) oder Lagern in einem Durchgangsloch (43) drehbeweglich gehalten wird.

10. Anordnung nach einem der Ansprüche 8 oder 9,
**dadurch gekennzeichnet, dass** die Betätigungshülse (15) eine umkehrbare Drehverbindung mit einem Betätigungsarm (21) einer Elektromaschine (20) aufweist.

11. Anordnung nach Anspruch 10, **dadurch gekennzeichnet, dass** das Verbindungsmittel sich in einer Liste befindet, umfassend eine Längsnut (15c), die sich an der Innenwand der Betätigungshülse (15) von einem der Außenseite des Verbrennungsmotors zugewandten Ende aus erstreckt, die geeignet ist, mit Längszähnen des Betätigungsarms (21) der Elektromaschine (20) zusammenzuwirken.

12. Anordnung nach einem der Ansprüche 8 bis 11,
**dadurch gekennzeichnet, dass** die Betätigungshülse (15) ein Getriebezahnrad (16) trägt.

13. Anordnung nach Anspruch 12, **dadurch gekennzeichnet, dass** das Betätigungsrad (14) sowie das Primärantriebsrad (12) von dem Verteilergehäuse (40) bedeckt sind.

## Claims

1. Motor vehicle powertrain arrangement comprising an internal combustion engine having a crankshaft connected to a drive system (10) for internal combustion engine and electric machine (20) accessories (36),
said drive system (10) being carried by a timing case (40) covering a timing face (30) of the internal combustion engine, **characterized in that** the crankshaft of said engine has a primary sleeve (31) arranged at its end, said sleeve carrying a timing drive wheel (32) and longitudinally extending coupling splines (35) able to cooperate with the accessory drive system (10).

2. The arrangement according to claim 1, **characterized in that** the accessories (36) are in a list comprising a water pump (36).

3. The arrangement according to claim 1 or 2, **characterized in that** the accessories (36) are carried by the timing case (40).

4. The arrangement according to any one of claims 1 to 3,
**characterized in that** the drive system (10) comprises a tubular guide sleeve (11) which carries a primary drive wheel (12) and which comprises latching splines (13) able to cooperate with the coupling splines (35) of the primary sleeve (31).

5. The arrangement according to claim 4, **characterized in that** the guide sleeve (11) is housed in a cavity (41) made in the timing case (40).

6. The arrangement according to claim 5, **characterized in that** the guide sleeve (11) is surrounded and rotatably held by bearings (42) housed in the cavity (41).

7. The arrangement according to any one of claims 4 to 6,
**characterized in that** the drive wheel (12) directly meshes with an actuating wheel (14) of the accessories actuation system (10).

8. The arrangement according to any one of claims 1 to 7,
**characterized in that** the drive system (10) comprises an actuation sleeve (15) carried by the timing case (40), which carries the accessories actuating wheel (14), in particular the electric machine (20).

9. The arrangement according to claim 8, **characterized in that** the actuating sleeve (15) passes through the timing case (40) and is held rotatably in a through-hole (43) by bearings (44).

10. The arrangement according to either one of claims 8 or 9,
**characterized in that** the actuating sleeve (15) comprises a means for reversible rotational connection to an actuating arm (21) of an electrical machine (20).

11. The arrangement according to claim 10, **characterized in that** the connecting means is in a list comprising a longitudinal spline (15c) extending on the inner wall of the actuating sleeve (15) from an end facing the outside of the internal combustion engine, adapted to cooperate with longitudinal teeth of the actuating arm (21) of the electric machine (20).

12. The arrangement according to any one of claims 8 to 11,
**characterized in that** the actuating sleeve (15) carries a transmission gear (16).

13. The arrangement according to claim 12, **characterized in that** both the drive wheel (14) and the primary drive wheel (12) are covered by the timing case (40).
